(19) Europäisches Patentamt
European Patent Office
Office européen des brevets

(11) Veröffentlichungsnummer : **0 416 386 B1**

(12) # EUROPÄISCHE PATENTSCHRIFT

(45) Veröffentlichungstag der Patentschrift : **30.11.94 Patentblatt 94/48**

(51) Int. Cl.$^5$ : **G11B 5/702**

(21) Anmeldenummer : **90116213.1**

(22) Anmeldetag : **24.08.90**

(54) **Magnetische Aufzeichnungsträger.**

(30) Priorität : **02.09.89 DE 3929165**

(43) Veröffentlichungstag der Anmeldung : **13.03.91 Patentblatt 91/11**

(45) Bekanntmachung des Hinweises auf die Patenterteilung : **30.11.94 Patentblatt 94/48**

(84) Benannte Vertragsstaaten : **DE FR GB NL**

(56) Entgegenhaltungen :
**DE-A- 3 227 164**
**US-A- 4 775 595**
**PATENT ABSTRACTS OF JAPAN, Band 11, Nr. 256 (P-607), 20. August 1987; & JP-A-62 062 428 (SONY) 19-03-1987**
**PATENT ABSTRACTS OF JAPAN, Band 11, Nr. 112 (P-565), 9. April 1987; & JP-A-61 260 419 (TOYOBO) 18-11-1986**

(73) Patentinhaber : **BASF Aktiengesellschaft**
**Carl-Bosch-Strasse 38**
**D-67063 Ludwigshafen (DE)**

(72) Erfinder : **Bobrich, Michael, Dr.**
**In den Mühlgärten 3**
**D-6737 Boehl-Iggelheim (DE)**
Erfinder : **Roller, Hermann**
**Schwedlerstrasse 118**
**D-6700 Ludwigshafen (DE)**
Erfinder : **Lehner, August**
**Wachenheimer Strasse 4**
**D-6701 Roedersheim-Gronau (DE)**
Erfinder : **Keppeler, Uwe, Dr.**
**Ungsteiner Strasse 22**
**D-6700 Ludwigshafen (DE)**
Erfinder : **Süttinger, Rudolf, Dr.**
**Karl-Christ-Strasse 17**
**D-6900 Heidelberg (DE)**
Erfinder : **Loch, Werner, Dr.**
**An der Bleiche 2**
**D-6701 Erpolzheim (DE)**
Erfinder : **Lenz, Werner, Dr.**
**Heinrich-Baermann-Strasse 14**
**D-6702 Bad Dürkheim (DE)**
Erfinder : **Schulz, Günther, Dr.**
**Im Roehrich 45**
**D-6702 Bad Dürkheim (DE)**



Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft magnetische Aufzeichnungsträger, bestehend aus einem nichtmagnetischen Trägermaterial und mindestens einer darauf haftfest aufgebrachten magnetisierbaren Schicht auf Basis eines Polyurethanbindemittels das gegebenenfalls mit Polyisocyanat vernetzt wird, wobei das Bindemittel zu mindestens 50 Gew.% aus einem niedermolekularen verzweigten Polyharnstoffurethan mit OH-gruppenhaltigen Harnstoffgruppen an den Kettenenden besteht und in dem durch Einbau von Siloxangruppen die Gleiteigenschaften verbessert und die Reibung verringert wird.

In modernen Audio- und Videoaufzeichnungs- und Wiedergabegeräten wird an magnetische Aufzeichnungsträger Anforderungen in vielfacher Hinsicht gestellt. Neben den hohen Ansprüchen an die Aufzeichnungs- und Wiedergabeeigenschaften bei Audiobändern, Videobändern und flexiblen Datenträgern, die stetig verbessert werden, wird vor allem hinsichtlich der mechanischen Eigenschaften der Aufzeichnungsträger eine ständige Verbesserung gefordert. Die Magnetschichten müssen sehr flexibel sein, eine hohe Elastizität aufweisen und eine hohe Reißfestigkeit aufweisen. Daneben wird, zur Vermeidung von Pegeleinbrüchen, zunehmend eine Verrringerung der Reibungswerte, eine Erhöhung der Abrieb- und Verschleißfestigkeit, gefordert.

Eine Verbesserung der Aufzeichnungs- und Wiedergabeeigenschaften der magnetischen Aufzeichnungssysteme kann z.B. durch Erhöhung der Pigmentvolumenkonzentration bzw. durch Verwendung von feinteiligerem magnetischem Material erreicht werden. Durch derartige Maßnahmen wird jedoch die mechanische Stabilität der Magnetschicht nachhaltig beeinflußt.

In der Patentliteratur werden viele Polyurethane bzw. Polyurethanelastomere, welche für die Herstellung magnetischer Aufzeichnungsträger geeignet sind, so beispielsweise in DE-B 11 06 959, DE-B 25 00 921, 24 42 763, DE-B 27 53 694 oder DE-A 32 27 164 beschrieben.

Bei der Verwendung dieser üblichen Bindemittelsysteme treten bei der Aufnahme und Wiedergabe von Signalen mittels magnetischer Aufzeichnungsträger, welche im Kontakt über den Magnetkopf geführt und zudem noch über Umlenkrollen, -bolzen oder anderen Führungselemente bewegt werden, je nach Ausbildung der Schicht sehr hohe Reibungskräfte und häufig auch der Stick-Slip-Effekt oder "squeal"-Erscheinungen auf. "Stick-Slip" bezeichnet einen unregelmäßigen Bandtransport, wobei das Band abwechselnd stillsteht und weiterverläuft. "Squeal" ist ein unregelmäßiger Bandtransport, wobei die Geschwindigkeit des Bandes zwar nicht konstant ist, aber auch kein Stillstand des Bandes auftritt. Der dadurch entstehende Abrieb beeinflußt sowohl die Lebensdauer als auch die Betriebssicherheit.

Die Dauerlaufeigenschaften magnetischer Aufzeichnungsträger werden also durch die Oberflächenreibung (Gleitreibung) der Magnetschicht stark beeinflußt. Daher wird eine möglichst kleine Oberflächenreibung angestrebt, ohne daß die Aufzeichnung und Wiedergabe von Signalen verschlechtert wird.

Es ist daher üblich, den Schichtzusammensetzungen von magnetischen Aufzeichnungsträgern Gleitmittel zuzusetzen. Als geeignete Gleitmittel sind für diesen Zweck bereits eine große Anzahl verschiedener Gleitmittel, wie Polydimethylsiloxane, Paraffinöle, Wachse, gesättigte und ungesättigte Fettsäuren, Fettsäureester, Fettsäureamide, Salze von Fettsäuren, ferner feste Schmierstoffe, wie Molybdänsulfid, Graphit, Polytetrafluorethylenpulver und Polytrichlorfluorethylenpulver beschrieben. Auch wird angegeben, daß flüssige bzw. pastenförmige Gleitmittel gegenüber den festen Gleitmitteln den Vorteil besitzen, die zu schmierende Oberfläche mit einem homogenen dünnen Oberflächenfilm zu bedecken, wobei die mengenmäßige Zugabe an Gleitmittel sehr gering gehalten werden muß, da sonst die Oberfläche leicht klebrig wird. Diese flüssigen Gleitmittel können jedoch häufig nicht als alleinige Gleitmittel verwendet werden und werden deshalb mit festen oder pastenförmigen Gleitmittel kombiniert. Bei ausschließlicher Verwendung von flüssigen Gleitmitteln lassen sich bei vielen Anwendungsgebieten, insbesondere bei längerer Benutzungsdauer und ungünstigen Klimabedingungen weder das Sticken noch das Blocken und Verkleben der Bänder dauerhaft vermeiden.

So führt die Verminderung der Oberflächenreibung durch Zusatz von Siliconöl, wie es z.B. in der DE-B 877 213 beschrieben ist, speziell im Klimatest bei 40°C und 80 % relativer Feuchte, zum Ausschwitzen des Gleitmittels und damit zum Verkleben bzw. Blocken einzelner Magnetschichten.

Beim Zusatz von Schmierstoffen in Form feinverteilter, unlöslicher hydrophober Feststoffe oder wachsartiger Stoffe ist die Schmierwirkung nicht einheitlich, sondern die Feststoffpartikel befinden sich schon kurz nach der Herstellung nur an begrenzten Stellen an der Oberfläche sowie im Inneren der Magnetschicht. Diese hydrophoben Gleitmittel ziehen schlecht oder nicht auf das meist hydrophile magnetische Material auf und schwitzen besonders bei ungünstigen Klimabedingungen, wie hohe Temperatur und hohe Luftfeuchtigkeit, leicht aus. Dadurch kommt es zu Ablagerungen an allen bandberührenden Teilen, besonders am Kopf, wodurch Pegeleinbrüche verursacht werden.

Das Auftragen polymerer siloxangruppenhaltiger Verbindungen, wie es die DE-B 23 64 879 beschreibt, zeigt zwar ein befriedigendes Klimalaufverhalten, doch tritt hier die Gefahr des "Aufsammelns" der oligomeren

Anteile durch den Lesekopf auf, wobei durch diese Ablagerungen am Lesekopf eine Verschlechterung der Aufzeichnungs- und Wiedergabeeigenschaften verursacht wird.

Unabhängig davon ergab es sich, daß die bekannten hochmolekularen Polyurethanelastomere als Bindemittel oder in Bindemittelkombination die steigenden Qualitätsanforderungen bezüglich der Schichthaftung dann nicht mehr erfüllen können, wenn sowohl Temperatur wie auch Luftfeuchtigkeit, z.B. auf 30 bis 60°C bei 80 bis 100 % rel. Luftfeuchtigkeit erhöht werden.

Nachteilig bei der Verwendung der hochmolekularen Bindemittel ist jedoch der hohe Lösungsmittelbedarf, die lange Dispergierzeit und ebenso die nötige 2-Phasendispergierung. Außerdem wirken sich in diesen Bindemittelsystemen die besonderen Eigenschaften der magnetischen Materialien nur unbefriedigend aus.

Ein anderer Weg wurde in der JP-A 61-42745 vorgeschlagen. Hier werden zur Verbesserung des Reibungskoeffizienten und der Abriebfestigkeit zwei Schutzschichten auf die Magnetschicht aufgebracht, wobei die äußere Schicht aus einem siliconmodifiziertem Polyurethan-Acrylat besteht. Die Herstellung eines derartigen Schichtaufbaus ist jedoch sehr aufwendig.

Auch wurde bereits (JP-A 61-84717) die Verwendung eines Polyharnstoffharzes als Bindemittel beschrieben, das im Molekül Siloxanverbindungen aufweist. Dieses Bindemittel wird ohne Vernetzung eingesetzt. Zum Erhalt der gewünschten Eigenschaften ist ein sehr hoher Si-Gehalt von 5 bis 50 Gew.% nötig. In JP-A 61-66316 wird als Bindemittel ein Polyurethanharz angegeben, das entlang der Molekülkette Carboxylgruppen enthält und zusätzlich ein modifiziertes Siliconöl eingebunden enthält. Der Einbau von mehr als 10 Äquivalentprozente der Siliziumkomponente führt zu Bindemitteln mit herabgesetzter Festigkeit und geringerer Haftfestigkeit. Ein unverzweigtes Polyurethanharnstoffharz, das in der Polymerkette Siloxanverbindungen aufweist, ist in der JP-A 62-62428 offenbart. Zum Erhalt der gewünschten Eigenschaften sind jedoch noch zusätzlich externe Schmiermittel im Mengenbereich von 0,2 bis 20 Gew.-Teile, bezogen auf 100 Teile Bindemittel, notwendig.

Es war daher Aufgabe der Erfindung, magnetische Aufzeichnungsträger, bestehend aus einem nichtmagnetischen Trägermaterial und mindestens einer darauf haftfest aufgebrachten magnetisierbaren Schicht auf der Basis von in einem Polymerbindemittel mit stark verbesserter Gleitreibung und weiteren üblichen Zusatzstoffen feinverteilten magnetischen Material bereitzustellen, welche sowohl eine verbesserte Verschleißfestigkeit und verminderte Reibungswerte auch unter ungünstigen klimatischen Bedingungen aufweisen, und dennoch nicht das nachteilige Blockieren beim Betrieb der Aufzeichnungsträger und das Ausschwitzen von Gleitmittel zeigen.

Es wurde nun gefunden, daß bei einem magnetischen Aufzeichnungsträger, bestehend aus einem nichtmagnetischen Trägermaterial und mindestens einer haftfest darauf aufgebrachten Magnetschicht auf der Basis eines in einem mindestens zu 50 Gew.% aus einem thermoplastischen Polyurethan bestehenden Bindemittel feinverteilten magnetischen Materials sich die gestellte Aufgabe lösen läßt, wenn als thermoplastisches Polyurethan ein siloxangruppenhaltiges in Tetrahydrofuran lösliches, isocyanatgruppenfreies, verzweigtes Polyurethan mit OH-gruppenhaltigen Harnstoffgruppen an den Kettenenden und einem Molekulargewicht zwischen 4 000 und 30 000 eingesetzt wird, welches aus

A) 1 Mol eines Polyols mit einem Molekulargewicht zwischen 400 und 4000,

B) 0,3 bis 9 Mol eines Diols mit 2 bis 18 Kohlenstoffatomen,

C) 0,01 bis 1 Mol eines Triols mit 3 bis 18 Kohlenstoffatomen,

D) 0,001 bis 0,4 Mol einer organofunktionellen Polysiloxanverbindung mit zwei gegenüber Isocyanaten reaktiven Endgruppen und einem Molgewicht zwischen 300 und 4000,

E) 1,25 bis 13 Mol eines Diisocyanats mit 6 bis 30 Kohlenstoffatomen, wobei das Verhältnis NCO:OH in der Summe der Komponenten A, B, C und D 1,05:1,0 bis 1,4:1,0 beträgt, und

F) 0,05 bis 4 Mol eines OH-gruppenhaltigen, gegenüber Isocyanaten reaktiven primären oder sekundären Amins

hergestellt wird.

Zur Erzielung spezieller Eigenschaften ist es von Vorteil, wenn das Polymer eine OH-Zahl zwischen 30 und 160, vorzugsweise 40 bis 80 aufweist. Das Molekulargewicht liegt zwischen 4 000 und 30 000, entsprechend einem K-Wert (1 %ig in DMF) zwischen 20 und 45. Beim Aufbau dieser Polymeren hat es sich als zweckmäßig erwiesen, daß die OH-Endgruppen zum Teil, vorzugsweise über 80 % und insbesondere zu mehr als 90 % aus einem der folgenden Reste bestehen:

$$-NH-CO-NR'-R-OH$$

oder

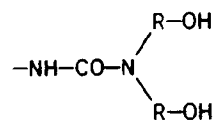

wobei

$$R = -(CH_2)_n-$$
$$R' = -H, -CH_3, -(CH_2)_n-CH_3$$

und

$$n = 1 \text{ bis } 10$$

bedeuten.

In dieser Weise aufgebaute Polymere weisen gegenüber solchen ohne diese Endgruppen eine verbesserte Haftfestigkeit auf. Weiterhin besteht dadurch die Möglichkeit den Gehalt an OH-Endgruppen zu erhöhen, wodurch bei der Vernetzung mit Polyisocyanat der Vernetzungsgrad, entsprechend den Anforderungen an die Magnetschicht, in weiten Grenzen variiert werden kann. Ebenfalls von Vorteil sind die Harnstoffgruppen, welche die Dispergierfähigkeit gegenüber den üblichen magnetischen Materialien erhöhen und die Haftfestigkeit verbessern.

Die erfindungsgemäß als Bindemittel in den Magnetschichten verwandten Polyurethane haben im allgemeinen eine Härte nach DIN 53 157 von 20 bis 130 s. Sie weisen ferner einen E-Modul (Elastizitätsmodul gemäß DIN 53 457) im Bereich von 50 bis 2500 $Nmm^{-2}$, eine Reißdehnung größer 70 % (DIN 53 455) und eine Reißfestigkeit zwischen 25 und 70 $Nmm^{-2}$ (DIN 53 455) auf. Der Erweichungspunkt liegt zwischen 80 und 180°C. Besonders günstig ist eine Pendelhärte (DIN 53 157) von 25 bis 125 s, ein E-Modul von 55 bis 2000 $Nmm^{-2}$, eine Reißdehnung von 80 bis 500 % und eine Reißfestigkeit von 25 bis 50 $Nmm^{-2}$.

Die vorteilhaften Eigenschaften der erfindungsgemäß aufgebauten magnetischen Aufzeichnungsträger werden im Vergleich zu den unter Verwendung der üblichen thermoplastischen Polyurethanelastomeren erhaltenen auch deutlich, wenn vor dem Auftragen der Dispersion auf den Träger ein Polyisocyanat zugesetzt wird. Für die Vernetzung kann eine Vielzahl organischer Di-, Tri- oder Polyisocyanate oder Isocyanatprepolymerer bis zu einem Molekulargewicht von 10 000, vorzugsweise zwischen 500 und 3000, verwendet werden. Bevorzugt sind Polyisocyanate bzw. Isocyanatprepolymere, die mehr als 2 NCO-Gruppen pro Molekül tragen. Als besonders geeignet haben sich Polyisocyanate auf Basis von Toluylendiisocyanat, Hexamethylendiisocyanat oder Isophorondiisocyanat, die durch Polyaddition and Di- oder Triole oder durch Biuret- und Isocyanuratbildung entstehen, erwiesen. Besondes günstig ist ein Additionsprodukt von Toluylendiisocyanat an Trimethylolpropan und Diethylenglykol.

Die Menge an zugesetzter Polyisocyanatkomponente kann je nach den an das Aufzeichnnungsmaterial gestellten Anforderungen, bezogen auf die OH-Gruppe des zu vernetzenden Polyurethanbindemittels, im Unterschuß von bis zu 70 %, vorzugsweise bis zu 50 % oder im Überschuß von bis zu 100 % vorzugsweise von bis zu 50 %, erfolgen.

Zur Herstellung der Polyurethane wird als Komponente A ein Polydiol mit einem Molekulargewicht von 400 bis 4000, bevorzugt von 700 bis 2500, eingesetzt. Hierzu eignen sich die bekannten Polyesterole, Polyetherole, Polycarbonatdiole und Polycaprolactondiole.

Die Polyesterole sind zweckmäßigerweise überwiegend lineare Polymere mit endständigen OH-Gruppen, bevorzugt solche mit 2 OH-Endgruppen. Die Säurezahl der Polyesterole ist kleiner als 10 und vorzugsweise kleiner als 3. Die Polyesterole lassen sich in einfacher Weise durch Veresterung von aliphatischen, aromatischen Dicarbonsäuren mit 4 bis 15 C-Atomen, vorzugsweise 4 bis 6 C-Atomen, mit Glykolen, bevorzugt Glykolen mit 2 bis 25 C-Atomen doer durch Polymerisation von Lactonen mit 3 bis 20 C-Atomen herstellen. Als Dicarbonsäuren lassen sich beispielsweise Glutarsäure, Pimelinsäure, Korksäure, Sebacinsäure, Dodecansäure und vorzugsweise Adipinsäure, Bernsteinsäure und Phthalsäuren einsetzen. Die Dicarbonsäuren können einzeln oder als Gemische verwendet werden. Zur Herstellung der Polyesterole kann es gegebenenfalls vorteilhaft sein, anstelle der Dicarbonsäuren die entsprechenden Säurederivate, wie Carbonsäureanhydride oder Carbonsäurechloride zu verwenden. Geeignete aromatische Dicarbonsäuren sind Terephthalsäure, Isophthalsäure oder Mischungen aus diesen mit anderen Dicarbonsäuren, z.B. Diphensäure, Sebacinsäure, Bernsteinsäure und Adipinsäure. Beispiele für geeignete Glykole sind Diethylenglykol, 1,5-Pentandiol, 1,10-Decandiol und 2,2,4-Trimethylpentandiol-1,5. Vorzugsweise verwendet werden 1,2-Ethandiol, 1,4-Butandiol, 1,6-Hexandiol und 2,2-Dimethylpropandiol-1,3; 1,4-Dimethylolcyclohexan; 1,4-Diethanolcyclohexan, ethoxilierte/propoxilierte Produkte des 2,2-Bis-(4-hydroxyphenylen)-propan (Bisphenol A). Je nach den gewünschten Eigenschaften der Polyurethane können die Polyole alleine oder als Mischung in verschiedenen Mengenverhältnissen verwendet werden. Als Lactone für die Herstellung der Polyesterole eignen sich z.B. α,α-Dimethyl-β-propiolacton, γ-Butyrolacton und vorzugsweise ε-Caprolacton.

Die Polyetherole sind im wesentlichen lineare, endständige Hydroxylgruppen aufweisende Substanzen, die Etherverbindungen enthalten und ein Molekulargewicht von etwa 600 bis 4000, vorzugsweise von 1000 bis 2000, besitzen. Geeignete Polyetherole können leicht durch Polymerisation von cyclischen Ethern, wie Tetrahydrofuran, oder durch Umsetzung von einem oder mehreren Alkylenoxiden mit 2 bis 4 Kohlenstoffaomen im Alkylenrest mit einem Startermolekül, das zwei aktive Wasserstoffatome im Alkylenrest gebunden enthält, hergestellt werden. Als Alkylenoxide seien beispielsweise genannt: Ethylenoxid, 1,2-Propylenoxid, Epichlorhydrin, 1,2- und 2,3-Butylenoxid. Die Alkylenoxide können einzeln, alternierend nacheinander oder als Mischung verwendet werden. Als Startermoleküle kommen beispielsweise in Betracht: Wasser, Glykole, wie Ethylenglykol, Propylenglykol, 1,4-Butandiol und 1,6-Hexandiol, Amine, wie Ethylendiamin, Hexamethylendiamin und 4,4'-Diamino-diphenylmethan und Aminoalkohole, wie Ethanolamin. Ebenso wie die Polyesterole können auch die Polyetherole allein oder in Mischungen verwendet werden. Die Polycarbonatdiole sind ebenso wie ihre Herstellung in der US-A 4 131 731 beschrieben, sie sind im allgemeinen auf Hexandiol-1,6-Basis aufgebaut.

Als Baustein B werden Diole mit 2 bis 20 Kohlenstoffatomen, vorzugsweise 2 bis 10 C-Atome, eingesetzt, so z.B. 1,2-Ethandiol, 1,3-Propandiol, 1,4-Butandiol, 1,6-Hexandiol, 1,5-Pentandiol, 1,10-Decandiol, 2-Methyl-1,3-propandiol, 2-Methyl-2-butyl-1,3-propandiol, 2,2-Dimethyl-1,4-butandiol, 2-Methyl-2-butyl-1,3-propandiol, Hydroxypivalinsäureneopentylglykolester, Diethylenglykol, Triethylenglykol und Methyldiethanolamin. Die Diole können einzeln oder als Gemische verwendet werden. In untergeordnetem Maße können auch Diamine mit 2 bis 15 Kohlenstoffatomen wie Ethylendiamin, 1,6-Hexamethylendiamin, 4,9-Dioxododecan-1,12-diamin, 4,4'-Diaminodiphenylmethan oder Amlnoalkohole wie z.B. Monoethanolamin, Monoisopropanolamin und 2-Amino-2-methylpentan-2-ol eingesetzt werden. Hierbei hat es sich als vorteilhaft erwiesen, die dabei entstehenden Harnstoffgruppen in die Polymerkette einzubauen. Die Harnstoffgruppen am Kettenende sind hierbei von untergeordneter Bedeutung.

In gleicher Weise können als Bausteine B die genannten Diole auch ganz oder teilweise durch Wasser ersetzt werden.

Als Triole (Bausteine C) werden Verbindungen mit 3 bis 18, vorzugsweise 3 bis 6 C-Atomen, angewandt. Beispiele für entsprechende Triole sind Glycerin oder Trimethylolpropan. Geeignet sind auch niedermolekulare Umsetzungsprodukte von z.B. Trimethylolpropan mit Ethylenoxid und/oder Propylenoxid. Das Vorhandensein von Triolen bei der Polyaddition führt zu einer Verzweigung des Endprodukts, was sich, sofern keine örtliche Vernetzung auftritt, positiv auf die mechanischen Eigenschaften des Polyurethans auswirkt.

Bei der Komponente D handelt es sich um Polysiloxandiole, Polysiloxandicarbonsäuren oder ω-Hydroxypolysiloxancarbonsäuren oder um ω-Hydroxypolysiloxanamin. Diese Produkte können einzeln oder auch in Kombination eingesetzt werden. Wegen der guten Handhabbarkeit und Löslichkeit in den entsprechenden Lösungsmitteln sind bevorzugt Polysiloxandiole geeignet.

Solche Siliconöle mit endständigen, am Silizium gebundenen Hydroxyalkylgruppen weisen z.B. folgenden Aufbau auf:

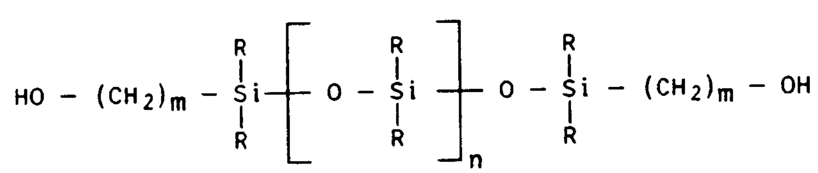

m= 1 n = 2-133

R = Kohlenwasserstoffrest mit 1 bis 20 C-Atomen

Für R = $CH_3$ können z.B. die Baysilon® Typen der Fa. Bayer oder Tego® OF-1010 bzw. Tego® OF-1025 der Fa. Goldschmidt eingesetzt werden.

Zur Bildung der siloxanhaltigen Polyurethane oder NCO-gruppenhaltiger Zwischenprodukte werden die unter A, B, C und D genannten Bausteine mit aliphatischen, cycloaliphatischen oder aromatischen Diisocyanten mit 6 bis 30 Kohlenstoffatomen (Baustein E) umgesetzt. Zu diesem Zweck eignen sich z.B. Verbindungen wie 2,4-Toluylen-diisocyanat, 2,6-Toluylendiisocyanat, m-Phenylendiisocyanat, 4-Chlor-1,3-phenylendiisocyanat, 1,5-Naphthylendiisocyanat, 1,6-Hexamethylendiisocyanat, 1,4-Cyclohexylendiisocyanat und 1,5-Tetrahydronaphthylendiisocyanat, 4,4'-Diphenylmethandiisocyanat, 4,4,'-Dicyclohexylmethandiisocyanat oder Isophorondiisocyanat. Ebenso können siloxanhaltige Diisocyanate eingesetzt werden. Diese siloxanhaltigen Diisocyanate können bis zu 32 Molprozente der gesamten Molmenge Diisocyanat betragen.

Zur Bildung der OH-gruppenhaltigen Polyurethanharnstoffelastomeren wird das NCO-gruppenhaltige

Zwischenprodukt aus A bis E mit Aminoalkoholen (mit 2 bis 16 Kohlenstoffatomen) umgesetzt. Diese Aminoalkohole mit 2 bis 16, vorzugsweise 3 bis 6 Kohlenstoffatomen, sind u.a. Monoethanolamin, Methylisopropanolamin, Ethylisopropanolamin, Methylethanolamin, 3-Aminopropanol, 1-Ethylaminobutan-2-ol, 4-Methyl-4-aminopentan-2-ol, N-(2-Hydroxyethyl)anilin. Diolamine sind besonders geeignet, da durch ihre Anlagerung am Kettenende die OH-Zahl der Polymeren verdoppelt wird. Als besonders günstig haben sich Diethanolamin und Diisopropanoldiamin erwiesen.

Das Verhältnis der Komponenten A bis F zueinander kann von 1,25 bis 13 Mol Diisocyanat je Mol Polydiol bei Verwendung von 0,3 bis 9, vorzugsweise 0,5 bis 5 Mol des Diols mit 2 bis 18 C-Atomen und 0,01 bis 1 Mol, vorzugsweise 0,15 bis 0,5 Mol, Triol variiert werden, wobei die Menge des verwendeten Diols teilweise von dem Molekulargewicht des verwendeten Polydiols abhängt. Die Menge des angewandten Isocyanats sollte zu 5 bis 35 % im Unterschuß, bezogen auf die Mengen der NH- oder hydroxylhaltigen Verbindungen vorliegen, so daß am Ende der Reaktion praktisch kein freies, nicht umgesetztes Isocyanat, aber freie, nicht umgesetzte Hydroxylgruppen verbleiben. Aus praktischen und lacktechnischen Gründen ist es jedoch häufig zweckmäßig, in einer Vorreaktion der Komponenten A, B, D und E einen Diisocyanatüberschuß von 5 bis 40 % bevorzugt 10 bis 30 %, bezogen auf die zur vollständigen Umsetzung der Reaktionsteilnehmer erforderliche Menge, zu verwenden, so daß das Verhältnis der Zahl der eingesetzten Hydroxylgruppen zur Zahl der Isocyanatgruppen in dieser Reaktionsstufe ungefähr 1:1,05 bis 1:1,4, vorzugsweise ungefähr 1:1,1 bis 1:1,30 beträgt. In der zweiten Reaktionsstufe wird dann eine dem NCO-Gehalt entsprechende NH-äquivalente Menge der Komponente F, d.h. 0,05 bis 4, vorzugsweise 0,3 bis 2,5 Mol je Mol der Komponente A, zugesetzt, bzw. das NCO-Präpolymere wird zum Aminoalkohol gegeben, so daß die Aminogruppen mit dem Isocyanat reagieren. Wird in dieser zweiten Reaktionsstufe ein geringer Unterschuß an NH- bzw. $NH_2$-Gruppen gegenüber den NCO-Gruppen angeboten, dann wird ein Teil des Aminoalkohols in das Molekül eingebaut und ergibt je nach Aminoalkohol eine Verzweigungsstelle. Verwendet man einen Überschuß an NH-Gruppen, dann wird der Aminoalkohol erst bei der Vernetzungsreaktion völlig in den Polymerverband eingebaut. Damit ist es durch die Auswahl, d.h. durch Variation der Endgruppen, möglich, das Polymere den jeweiligen Anforderungen, wie die Fähigkeit zur Filmbildung und zur Dispergierung, anzupassen.

Die so aufgebauten thermoplastischen, elastischen OH-gruppenhaltigen Polyurethane werden in Lösung nach dem 2-Stufenverfahren, gegebenenfalls in Gegenwart von Katalysatoren und anderen Hilfsmitteln und/oder Zusatzstoffen hergestellt. Diese Produkte nach dem lösungsmittelfreien Batch-Verfahren herzustellen, ist nicht möglich. Da sich aufgrund der Anwesenheit des Triols und der Reaktion von Amin mit NCO-Gruppen bei der Substanzpolyaddition zumindest teilweise Gel-Teilchen bilden, wird in Lösung gearbeitet. Allgemein wird bei der Lösungspolyaddition die Gefahr einer örtlichen übervernetzung, wie sie bei der Substanzpolyaddition auftritt, vermieden.

Beim 2-Stufenverfahren sind je nach Reaktionsbedingungen (Lösungsmittelmenge, Reaktionswärme) zwei unterschiedliche Fahrweisen möglich.

Fahrweise 1: Das Diisocyanat wird mit etwas Lösungsmittel vorgelegt, dann werden die Bausteine A, B, C, D und gegebenenfalls der Katalysator und die Hilfs- und Zusatzstoffe in Lösungsmittel bei Temperaturen von 20 bis 90°C, vorzugsweise 30 bis 70°C, in 0,2 bis 5 Stunden zugegeben. Die Komponenten werden bis zum gewünschten NCO-Gehalt umgesetzt, dann wird in der 2. Stufe das Abstoppmittel (Komponente F) zugesetzt.

Fahrweise 2: Bei diesem Verfahren werden alle Ausgangskomponenten A bis E in einem Teil des Lösungsmittels gelöst, so daß Lösungen mit einem Feststoffgehalt von 15 bis 50 Gew.% gebildet werden. Anschließend werden die Lösungen unter Rühren auf Temperaturen von 20 bis 90°C, vorzugsweise von 30 bis 70°C, gegebenenfalls nach der Katalysatorzugabe, erwärmt. Dann werden die Komponenten bis zum gewünschten NCO-Gehalt umgesetzt, danach wird in der 2. Stufe das Abstoppmittel zugegeben.

Beim 2-Stufenverfahren wird in der ersten Stufe mit einem NCO-Überschuß, gegenüber den Bausteinen A bis D gearbeitet. Bei beiden Fahrweisen ist es möglich, in einem Teil des Lösungsmittels die Reaktion zu beginnen und das restliche Lösungsmittel während oder nach der Reaktion zuzugeben.

Als Lösungsmittel für die Herstellung der Polyurethane werden vorzugsweise cyclische Ether, wie Tetrahydrofuran und Dioxan, und cyclische Ketone, wie Cyclohexanon, verwendet. Selbstverständlich können je nach Anwendungsgebiet die Polyurethane auch in anderen stark polaren Lösungsmitteln, wie Dimethylformamid, N-Methylpyrrolidon, Dimethylsulfoxid oder Ethylglykolacetat gelöst werden. Ebenso ist es möglich, die genannten Lösungsmittel mit Aromaten, wie Toluol oder Xylol und Estern, wie Ethyl- oder Butylacetat, zu mischen.

Als geeignete Katalysatoren zur Herstellung der Polyurethane und für die Vernetzungsreaktion seien beispielhaft genannt: tert.-Amine, wie Triethylamin, Triethylendiamin, N-Methyl-pyridin und N-Methyl-morpholin, Metallsalze, wie Zinnoctoat, Bleioctoat und Zinkstearat und organische Metallverbindungen, wie Dibutylzinndilaurat. Die geeignete Katalysatormenge ist abhängig von der Wirksamkeit des in Frage kommenden Katalysators. Im allgemeinen hat sich als zweckmäßig erwiesen, 0,005 bis 0,3 Gewichtsteile für jeweils 100 Gewichtsteile, vorzugsweise 0,01 bis 0,1 Gewichtsteile für jeweils 100 Gewichtsteile Polyurethan zu verwenden.

Die erfindungsgemäß verwendeten Polyurethane lassen sich als alleinige Bindemittel für die Herstellung von Magnetschichten verwenden, es ist jedoch für spezielle Anwendungszwecke bei magnetischen Aufzeichnungsträgern gemäß der Erfindung vorteilhaft, eine zweite Bindemittelkomponente in Mengen von 5 bis 50 Gewichtsteilen, vorzugsweise von 10 bis 40 Gewichtsteilen, bezogen auf die resultierende Gesamtbindemittelmenge, zuzusetzen. Die im Bindemittelgemisch enthaltenen physikalisch trocknenden Bindemittel sind bekannt. Es handelt sich hierbei unter anderem um ein Polyvinylformal-Bindemittel, welches durch Hydrolyse eines Polymerisats eines Vinylesters und anschließende Umsetzung des Vinylalkohol-Polymeren mit Formaldehyd hergestellt wurde. Die Polyvinylformale haben zweckmäßigerweise einen Vinylformalgruppengehalt von mindestens 65 Gew.% und insbesondere mindestens 80 Gew.%. Geeignete Polyvinylformale haben einen Gehalt an Vinylalkohol-Gruppen von 5 bis 13 Gew.%, einen Gehalt an Vinylformal-Gruppen von 80 bis 88 Gew.%, ein spezifisches Gewicht von ca. 1,2 und eine Viskosität von 50 bis 120 mPas gemessen bei 20°C mit einer Lösung von 5 g Polyvinylformal in 100 ml Phenol-Toluol (1:1). In gleicher Weise geeignet sind neben dem Polyvinylformal Vinylchlorid-diol-mono- oder -di(meth)acrylat-Copolymerisate, die sich z.B. in an sich bekannter Weise durch Lösungscopolymerisation oder Suspensionscopolymeristion von Vinylchlorid und dem Diolmonomethacrylat oder -monoacrylat herstellen lassen. Das hierfür zum Einsatz gelangende Diolmono- oder -diacrylat oder -methacrylat ist ein Veresterungsprodukt von Acrylsäure oder Methacrylsäure mit der entsprechenden molaren Menge an aliphatischem Diol mit 2 bis 4 C-Atomen, wie Ethylenglykol, 1,4-Butandiol und bevorzugt Propandiol, wobei das Propandiol vorzugsweise aus 1,3-Propandiol und 0 bis 50 Gew.% 1,2-Propandiol besteht. Die Copolymerisate haben zweckmäßigerweise einen Vinylchloridgehalt von 50 bis 95 Gew.% und einen Diolacrylat- oder -methacrylat-Gehalt von 5 bis 50 Gew.%. Besonders geeignete Copolymerisate besitzen vorzugsweise einen Gehalt von 70 bis 90 Gew.% Vinylchlorid und 10 bis 30 Gew.% Diolmonoacrylat bzw. Diolmonomethacrylat. Eine 15 %ige Lösung besonders geeigneter Copolymerisate wie der Vinylchlorid-Propandiolmonoacrylat-Copolymerisate in einem Gemisch aus gleichen Volumenteilen von Tetrahydrofuran und Dioxan weist bei 25°C eine Viskosität von etwa 30 mPas auf. Der K-Wert nach H.Fikentscher (Cellulosechemie 13 (1932), S. 58 ff.) der besonders geeigneten Produkte liegt zwischen 30 und 50, vorzugsweise bei etwa 40.

Außerdem lassen sich vorteilhaft Phenoxyharze, deren Konstitution mit der wiederkehrenden Formel

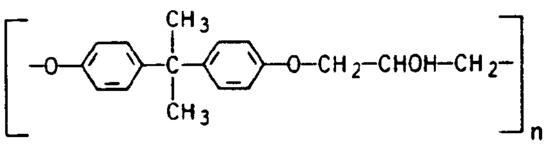

in der n annähernd gleich 100 ist, zu beschreiben ist, einsetzen. Es handelt sich hierbei um Polymere, wie sie unter den Handelsbezeichnungen Epikote® der Firma Shell Chemical Co. oder unter der Bezeichnung Epoxidharz PKHH® der Union Carbide Coporation bekannt sind.

In gleicher Weise eignen sich Celluloseester-Bindemittel zur Verwendung in dem bezeichneten Bindemittelgemisch. Dies sind Veresterungsprodukte der Cellulose mit Salpetersäure oder mit Carbonsäuren mit 1 bis 4 Kohlenstoffatomen, wie z.B. Celluloseacetat, Cellulosetriacetat, Celluloseacetopropionat, Celluloseacetobutyrat.

Die weitere Verarbeitung des Bindemittelgemisches mit magnetischen Materialien und Hilfsstoffen zu den erfindungsgemäßen magnetischen Aufzeichnungsträgern erfolgt in an sich bekannter Weise.

Als anisotrope magnetische Materialien können die an sich bekannten Pigmente verwendet werden, die die Eigenschaften der resultierenden Magnetschichten wesentlich beeinflussen, wie z.B. Gamma-Eisen(III)-oxid, feinteiliger Magnetit, ferromagnetisches undotiertes oder dotiertes Chromdioxid, kobaltmodifiziertes Gamma-Eisen(III)-oxid, Bariumferrite oder ferromagnetische Metallteilchen. Bevorzugt sind nadelförmiges kobaltmodifiziertes oder unmodifiziertes Gamma-Eisen(III)oxid sowie ferromagnetisches Chromdioxid und Metallpigment. Die Teilchengröße beträgt im allgemeinen 0,2 bis 2 µm, bevorzugt ist der Bereich von 0,3 bis 0,8 µm.

In an sich bekannter Weise können die Magnetschichten ferner Zusätze, wie Dispergiermittel und in untergeordneten, gegenüber dem Stand der Technik geringen Mengen auch weitere Gleitmittel, aber auch Füllstoffe enthalten, die bei der Dispergierung der Magnetpigmente oder bei der Herstellung der Magnetschicht zugemischt werden.

Das Mengenverhältnis von magnetischem Material zu Bindemittel in den erfindungsgemäßen Aufzeichnungsmaterialien liegt zwischen 1 bis 10 und insbesondere 3 bis 6 Gewichtsteilen magnetisches Material auf ein Gewichtsteil des Bindemittelgemisches. Es ist ein besonderer Vorteil, daß aufgrund des vorzüglichen Pigmentbindevermögens der speziellen Polyurethane hohe Magnetmaterialkonzentrationen in den Magnetschichten möglich sind, ohne daß die mechanisch-elastischen Eigenschaften verschlechtert oder die Anwendungseigenschaften merklich in Mitleidenschaft gezogen werden.

Als nichtmagnetische und nichtmagnetisierbare Träger lassen sich die üblichen starren oder flexiblen Trägermaterialien verwenden, insbesondere Folien aus linearen Polyestern, wie Polyethylenterephthalat, im allgemeinen in Stärken von 4 bis 200 µm und insbesondere von 6 bis 36 µm. In neuerer Zeit ist auch die Anwendung der Magnetschichten auf Papierträgern für Zwecke der mittleren Datentechnik bedeutend geworden; auch hierfür lassen sich die erfindungsgemäßen Beschichtungsmassen vorteilhaft verwenden.

Die Herstellung der erfindungsgemäßen magnetischen Aufzeichnungsträger kann in bekannter Weise erfolgen. Zweckmäßig wird die in einer Dispergiermaschine, z.B. einer Topfkugelmühle oder einer Rührwerksmühle, aus dem magnetischen Material und einer Lösung der Bindemittel unter Zusatz von Dispergiermitteln und anderen Zusätzen hergestellte Magnetpigmentdispersion nach - falls erforderlich - dem Zumischen des Polyisocyanatvernetzers filtriert und mit der üblichen Beschichtungsmaschine, z.B. mittels eines Linealgießers, auf den nichtmagnetischen Träger aufgetragen. Zur Erzielung von hohen Ela- und Magnetwerten bei einer kürzeren Dispergierzeit ist es von Vorteil, die Dispergierung mit der Komponente 1 durchzuführen und die Komponenten 2 nach der Dispergierung einzurühren. Dieses Verfahren bietet sich an, denn die genannte Komponente 2 ist mit der Komponente 1 gut verträglich. In der Regel erfolgt eine magnetische Ausrichtung, bevor die flüssige Beschichtungsmischung auf dem Träger getrocknet wird; letzteres geschieht zweckmäßigerweise in 10 bis 200 s bei Temperaturen von 50 bis 90°C. Die Magnetschichten können auf üblichen Maschinen mittels Hindurchführen zwischen geheizten und polierten Walzen, gegebenenfalls bei Anwendung von Druck und Temperaturen von 25 bis 100°C, vorzugsweise 60 bis 80°C, geglättet und verdichtet werden. Dabei hat es sich bei vernetzenden Bindemitteln als sehr vorteilhaft erwiesen, die Kalandrierung vorzunehmen bevor die Vernetzung abgeschlossen ist, da die OH-Polymeren in unvernetzten Zustand sehr thermoplastisch sind, ohne hierbei zu verkleben. Die Dicke der Magnetschicht beträgt im allgemeinen 0,5 bis 20 µm, vorzugsweise 1 bis 10 µm. Im Falle der Herstellung von Magnetbändern werden die beschichteten Folien in der Längsrichtung in den üblichen, meist nach Zoll festgelegten Breiten geschnitten.

Die erfindungsgemäßen magnetischen Aufzeichnungsträger weisen ohne zusätzliche Gleitmittel oder bei stark verringertem Gleitmittelzusatz gegenüber solchen, die unter Verwendung von Polyurethanen bzw. Polyurethanmischungen nach dem Stand der Technik erhalten wurden, eine erniedrigte Gleitreibung auf. Ihre dennoch hohe Oberflächenhärte und der hohe E-Modul, die auch bei Temperaturen von 50°C um weniger als 50 % abfallen, sind weitere vorteilhafte Eigenschaften der erfindungsgemäßen Aufzeichnungsträger. Des weiteren werden im Dauerlauftest und speziell im Klimatest (bei 40°C und 80 % rel. Luftfeuchte) alle gestellten Anforderungen voll erfüllt.

Die in den nachstehenden Beispielen und Vergleichsversuchen genannten Teile und Prozente beziehen sich, soweit nicht anders angegeben, auf das Gewicht. Volumenteile verhalten sich zu Gewichtsteilen wie Liter zu Kilogramm.

Polymer A

53,1 g Toluylendiisocyanat und 75 g Diphenylmethandiisocyanat, gelöst in 234 g Tetrahydrofuran werden auf 60°C erhitzt und mit einem Tropfen Di-butylzinndilaurat versetzt. Dazu werden innerhalb von ca. zwei Stunden 250 g eines OH-gruppenhaltigen Polyesters aus Adipinsäure und 1,4-Butandiol mit einem Molekulargewicht von 1000, 5,7 g eines Polysiloxandiols (Molekulargewicht ca. 1 132), 27,1 g 1,6-Hexandiol und 1,34 g Trimethylolpropan und gelöst in 200 g Tetrahydrofuran gegeben. Nach einer Stunde wird nochmals ein Tropfen Dibutylzinndilaurat zugegeben. Nach Erreichen eines NCO-Gehalts von 1,04 % wird auf 45°C abgekühlt und danach 22,05 g Diethanolamin zugesetzt. Das resultierende Produkt hat einen Feststoffgehalt von 50 % eine OH-Zahl von 54,2 und einen K-Wert von 27.

Polymer B

146,1 g Toluylendiisocyanat und 65 g Diphenylmethandiisocyanat, gelöst in 255 g Tetrahydrofuran werden auf 60°C erhitzt und mit einem Tropfen Di-butylzinndilaurat versetzt. Dazu werden innerhalb von ca. zwei Stunden 200 g eines OH-gruppenhaltigen Polycarbonats mit einem Molekulargewicht von ca. 2000, 5,7 g eines Polysiloxandiols (Molekulargewicht ca. 1 132), 40,7 g 1,6-Hexandiol und 2,23 g Trimethylolpropan gelöst in 300 g Tetrahydrofuran gegeben. Nach Erreichen eines NCO-Gehalts von 0,46 % wird auf 45°C abgekühlt und danach 10,5 g Diethanolamin zugesetzt. Das resultierende Produkt hat einen Feststoffgehalt von 40 %, eine OH-Zahl von 30,3 und einen K-Wert von 34.

Polymer C

Es wurde wie beim Polymer A beschrieben verfahren, jedoch wurde anstelle des Polysiloxandiols die äquivalente Menge des Polyesterdiols eingesetzt.

Polymer D

Es wurde wie beim Polymer B beschrieben verfahren, jedoch wurde anstelle des Polysiloxandiols die äquivalente Menge des Polyesterdiols eingesetzt.

Beispiel 1

In einer Stahlkugelmühle mit einem Inhalt von 600 Volumenteilen, gefüllt mit 600 kg Stahlkugeln mit einem Durchmesser zwischen 4 und 6 mm, wurden 102 kg Tetrahydrofuran, 31 kg einer 50 %igen Lösung der Polyharnstoffurethane gemäß Beispiel A, 100 kg eines ferromagnetischen Chromdioxids Hc 40 kA/m mit einer mittleren Nadellänge von 0,5μm 1,0 kg Zinkstearat, 1,0 kg eines handelsüblichen Siliconöls eingefüllt und der Ansatz 36 Stunden dispergiert. Die Dispersion wurde dann unter Druck filtriert und unmittelbar vor dem Auftragen auf eine 15 μm dicke Polyethylenterephthalatfolie unter Rühren mit, bezogen auf 1 Teil Dispersion, 0,039 Teilen einer 75%igen Lösung eines Triisocyanats aus 3 Mol Toluylendiisocyanat und 1 Mol Trimethylolpropan versehen. Die beschichtete Folie wurde nach Durchlaufen eines Magnetfeldes zur Ausrichtung der Magnetteilchen bei Temperaturen zwischen 50 und 80°C getrocknet und durch Hindurchführen zwischen beheizten Walzen unter Druck (60°C, Liniendruck 200 kg/cm) geglättet.

Die Messung der magnetischen Eigenschaften wurde in einem Meßfeld von 160 kA/m durchgeführt: die remanente Magnetisierung betrug 178 mT und die Ausrichtung der magnetischen Teilchen, d.h. das Verhältnis der remanenten Magnetisierung längs zu quer, 3,0. Nach dem Schneiden von 3,81 mm breiten Bändern wurden die mech. Eigenschaften wie folgt bestimmt:

Test 1:

Reibungskoeffizient Schicht/Stahl, vor/nach Dauerlauf

Die Bestimmung der Reibungszahlen erfolgt nach DIN 45 522, Blatt 1. Die Reibungskoeffizienten werden am unbenutzten Band und am durch Dauerlauf benutzten Band gemessen.

Test 2:

Quasistatische Reibung

Die Reibungszahl wird durch Messen einer Zugkraft bestimmt, die ein über eine feststehende Meßtrommel geführtes Magnetband durch Reibung erzeugt. Die Meßtrommel ist eine Strahltrommel mit einer Oberflächenrauhigkeit von ca. 0,15 μm und einem Durchmesser von 70 mm. Das Bandstück ist 25 cm lang und wird bei einem Bandzug von 20 cN mit einer Geschwindigkeit von 1 mm/sec. und einem Umschlingungswinkel von 180°C über die Trommel geführt. Der Zug an der Meßdose F ist ein Maß für die Reibungszahl μ und zwar nach

$$\mu = \frac{1}{\pi} \times \ln \frac{F}{20}$$

(Prüfklima: 23°C, 50 % rel. Feuchte).

Test 3:

Dynamische Reibung

Die Reibungszahl wird entsprechend Test 2 durchgeführt, jedoch wird das Magnetband über eine sich mit einer Umfangsgeschwindigkeit von 9,5 cm/sec drehenden Meßtrommel geführt.

Test 4:

Dauerlauf-Abrieb

Mit dieser Messung werden die Abriebeigenschaften eines Bandes beurteilt. Es wird der Abrieb in Form des Gewichtsverlustes einer Bandschleife in mg gemessen. Dabei beträgt die Schleifenlänge 95 cm, die Bandgeschwindigkeit 4 m/sec, der Bandzu 35 cN und die Laufzeit 1 Stunde, bei einer Umgebungstemperatur von 23°C und einer rel. Luftfeuchte von 50 %.

Die Ergebnisse sind in der Tabelle angegeben.

Beispiel 2

Es wurde wie in Beispiel 1 beschrieben verfahren, jedoch wurden anstelle des Polymeren A 38,8 kg des Polymeren B und nur 60 % des Vernetzters eingesetzt. Die Ergebnisse sind in der Tabelle angegeben.

Vergleichsversuch 1

Es wurde wie in Beispiel 1 beschrieben verfahren, jedoch wurde anstelle des Polymeren A das Polymer C eingesetzt. Die Ergebnisse sind in der Tabelle angegeben.

Vergleichsversuch 2

Es wurde wie in Beispiel 2 beschrieben verfahren, jedoch wurde anstelle des Polymeren B das Polymer D eingesetzt. Die Ergebnisse sind in der Tabelle angegeben.

Tabelle

| | Beispiele | | Vergleichsversuche | |
|---|---|---|---|---|
| | 1 | 2 | 1 | 2 |
| Test 1 vor Dauerlauf | 0,25 | 0,33 | 0,48 | 0,50 |
| Test 1 nach Dauerlauf | 0,32 | 0,29 | 0,62 | 0,60 |
| Test 2 | 0,28 | 0,28 | 0,50 | 0,51 |
| Test 3 | 0,28 | 0,28 | 0,50 | 0,51 |
| Test 4 | 0,3 | 0,4 | 2,4 | 2,3 |

## Patentansprüche

1. Magnetische Aufzeichnungsträger, bestehend aus einem nichtmagnetischen Trägermaterial und mindestens einer haftfest darauf aufgebrachten Magnetschicht auf der Basis eines in einem mindestens zu 50 Gew.% aus einem thermoplastischen Polyurethan bestehenden Bindemittel feinverteilten magnetischen Materials, dadurch gekennzeichnet, daß als thermoplastisches Polyurethan ein siloxangruppenhaltiges in Tetrahydrofuran lösliches, isocyanatgruppenfreies, verzweigtes Polyurethan mit OH-gruppenhaltigen Harnstoffgruppen an den Kettenenden und einem Molekulargewicht zwischen 4 000 und 30 000 eingesetzt wird, welches aus
   A) 1 Mol eines Polyols mit einem Molekulargewicht zwischen 400 und 4000,
   B) 0,3 bis 9 Mol eines Diols mit 2 bis 18 Kohlenstoffatomen,
   C) 0,01 bis 1 Mol eines Triols mit 3 bis 18 Kohlenstoffatomen,
   D) 0,001 bis 0,4 Mol einer organofunktionellen Polysiloxanverbindung mit zwei gegenüber Isocyanaten reaktiven Endgruppen und einem Molgewicht zwischen 300 und 4000,
   E) 1,25 bis 13 Mol eines Diisocyanats mit 6 bis 30 Kohlenstoffatomen, wobei das Verhältnis NCO:OH in der Summe der Komponenten A, B, C und D 1,05:1,0 bis 1,4:1,0 beträgt, und
   F) 0,05 bis 4 Mol eines OH-gruppenhaltigen, gegenüber Isocyanaten reaktiven primären oder sekundären Amins

hergestellt wird.

2. Magnetischer Aufzeichnungsträger gemäß Anspruch 1, dadurch gekennzeichnet, daß die Komponente D ein Polysiloxandiol ist.

3. Magnetischer Aufzeichnungsträger gemäß Anspruch 1, dadurch gekennzeichnet, daß die Polysiloxankomponente, bezogen auf das Bindemittel zu weniger als 5 Gew.% und bevorzugt zu weniger als 3 Gew.% in das Bindemittel eingebaut ist.

4. Magnetischer Aufzeichnungsträger gemäß Anspruch 1, dadurch gekennzeichnet, daß ein Anteil von 0,001 bis 0,4 Mol der Komponente E ein organofunktionelles Polysiloxandiisocyanat ist, mit der Maßgabe, daß die Molsumme aus dieser Polysiloxandiisocyanat-Komponente und der Komponente D nicht mehr als 0,4 Mol beträgt und das Verhältnis NCO:OH in der Summe der Komponenten A, B, C und D 1,05:1,0 bis 1,4:1,0 beträgt.

5. Magnetischer Aufzeichnungsträger gemäß Anspruch 1, dadurch gekennzeichnet, daß die Komponente B ganz oder teilweise durch Diamine mit 2 bis 15 Kohlenstoffatomen ersetzt wird.

6. Magnetischer Aufzeichnungsträger gemäß Anspruch 1, dadurch gekennzeichnet, daß die Komponente B ganz oder teilweise durch primäre oder sekundäre Aminoalkohole mit 2 bis 20 Kohlenstoffatomen ersetzt wird.

7. Magnetischer Aufzeichnungsträger gemäß Anspruch 1, dadurch gekennzeichnet, daß die Komponente B ganz oder teilweise durch Wasser ersetzt wird.

8. Magnetischer Aufzeichnungsträger gemäß Anspruch 1, dadurch gekennzeichnet, daß das thermoplastische, siliziumgruppenhaltige, in Tetrahydrofuran lösliche, isocyanatgruppenfreie, verzweigte Polyurethan mit OH-gruppenhaltigen Harnstoffgruppen an den Kettenenden mit einem Isocyanat aus der Gruppe der Di-, Tri- und Polyisocyanate und der Isocyanatprepolymere mit einem Molgewicht bis zu 10 000 vernetzt wird.

9. Magnetischer Aufzeichnungsträger gemäß Anspruch 1, dadurch gekennzeichnet, daß die OH-Endgruppen zu mehr als 80 % aus einer

NH-CO-NR′-R-OH

oder

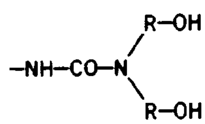

-Gruppe

bestehen,
wobei

$$R = -(CH_2)_n-$$
$$R' = -H, -CH_3, -(CH_2)_n-CH_3$$

und

$$n = 1 \text{ bis } 10$$

bedeuten.

10. Magnetischer Aufzeichnungsträger gemäß Anspruch 8, dadurch gekennzeichnet, daß die vernetzende Polyisocyanatkomponente ein Polysiloxanisocyanat mit mindestens zwei NCO-Gruppen ist.

11. Magnetischer Aufzeichnungsträger gemäß Anspruch 8, dadurch gekennzeichnet, daß er das genannte Polyurethan als alleiniges Bindemittel enthält.

## Claims

1. A magnetic recording medium, consisting of a non-magnetic substrate and at least one magnetic layer which is applied firmly thereon and is based on a magnetic material finely dispersed in a binder consisting of not less than 50% by weight of a thermoplastic polyurethane, wherein the thermoplastic polyurethane used is a siloxane-containing, isocyanate-free, branched polyurethane which is soluble in tetrahydrofuran, has OH-containing urea groups at the chain ends and a molecular weight of from 4,000 to 30,000 and is prepared from
   A) 1 mole of a polyol having a molecular weight of from 400 to 4,000,
   B) from 0.3 to 9 moles of a diol of 2 to 18 carbon atoms,
   C) from 0.01 to 1 mole of a triol of 3 to 18 carbon atoms,
   D) from 0.001 to 0.4 mole of an organofunctional polysiloxane compound having two terminal groups reactive to isocyanates and a molecular weight of from 300 to 4,000,
   E) from 1.25 to 13 moles of a diisocyanate of 6 to 30 carbon atoms, the NCO : OH ratio in the sum of the components A, B, C and D being 1.05 : 1.0-1.4 : 1.0, and
   F) from 0.05 to 4 moles of an OH-containing primary or secondary amine which is reactive to isocyanates.

2. A magnetic recording medium as claimed in claim 1, wherein component D is a polysiloxanediol.

3. A magnetic recording medium as claimed in claim 1, wherein less than 5, preferably less than 3, percent by weight, based on the binder, of the polysiloxane component is incorporated in the binder.

4. A magnetic recording medium as claimed in claim 1, wherein from 0.001 to 0.4 mole of component E is an organofunctional polysiloxane diisocyanate, with the proviso that the sum of the number of moles of this polysiloxane diisocyanate component and the number of moles of component D is not more than 0.4 mole and the ratio of NCO to OH in the sum of the components A, B, C and D is from 1.05 : 1.0 to 1.4 : 1.0.

5. A magnetic recording medium as claimed in claim 1, wherein some or all of component B is replaced with diamines of 2 to 15 carbon atoms.

6. A magnetic recording medium as claimed in claim 1, wherein some or all of component B is replaced by primary or secondary amino alcohols of 2 to 20 carbon atoms.

7. A magnetic recording medium as claimed in claim 1, wherein some or all of component B is replaced with water.

8. A magnetic recording medium as claimed in claim 1, wherein the thermoplastic, silicon-containing, isocyanate-free, branched polyurethane which is soluble in tetrahydrofuran and has OH-containing urea groups at the chain ends is crosslinked with an isocyanate of the group consisting of the di-, tri- and polyisocyanates and of the isocyanate prepolymers having a molecular weight of not more than 10,000.

9. A magnetic recording medium as claimed in claim 1, wherein more than 80% of the terminal OH groups consist of an

   $$-NH-CO-NR'-R-OH$$

   or

   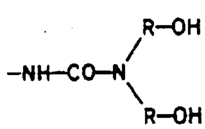 group

   where R is $-(CH_2)_n-$, R′ is -H, $-CH_3$ or $-(CH_2)_n-CH_3$ and n is from 1 to 10.

10. A magnetic recording medium as claimed in claim 8, wherein the crosslinking polyisocyanate component is a polysiloxane isocyanate having two or more NCO groups.

11. A magnetic recording medium as claimed in claim 8, which contains the stated polyurethane as the sole binder.

## Revendications

1. Support d'enregistrement magnétique, composé d'un matériau-support non magnétique et d'au moins une couche magnétique appliquée dessus, fixée par adhésion, à base d'un matériau magnétique finement réparti, dans un liant composé jusqu'à au moins 50 % en poids d'un polyuréthanne thermoplastique, caractérisé en ce que l'on a utilisé, comme polyuréthanne thermoplastique, un polyuréthanne ramifié, soluble dans du tétrahydrofurane, contenant des groupes siloxane, exempt de groupes isocyanate, avec des groupes urée contenant des groupes OH aux extrémités de chaîne et d'un poids moléculaire compris dans une plage entre 4000 et 30000, polyuréthanne qui est préparé à partir de :
   A) 1 mole de polyol ayant un poids moléculaire compris entre 400 et 4000,
   B) 0,3 à 9 moles d'un diol ayant 2 à 18 atomes de carbone,
   C) 0,01 à 1 mole d'un triol ayant 3 à 18 atomes de carbone,
   D) 0,001 à 0,4 mole d'un composé polysiloxane organo-fonctionnel à deux groupes d'extrémité, réagissant aux isocyanates, et d'un poids moléculaire compris entre 300 et 4000,
   E) 1,25 à 13 moles d'un diisocyanate ayant 6 à 30 atomes de carbone, le rapport NCO:OH dans la somme des composés A, B, C et D, étant de 1,05:1,0 à 1,4:1,0, et
   F) 0,05 à 4 moles d'une amine primaire ou secondaire, réagissant aux isocyanates, contenant des groupes OH.

2. Support d'enregistrement magnétique selon la revendication 1, caractérisé en ce que le composant D est un polysiloxanediol.

3. Support d'enregistrement magnétique selon la revendication 1, caractérisé en ce que le composé polysiloxane est logé dans le liant, à raison de moins de 5 % en poids et de préférence moins de 3 % en poids, par rapport au liant.

4. Support d'enregistrement magnétique selon la revendication 1, caractérisé en ce qu'une partie du composant E, comprise dans une plage allant de 0,001 à 0,4 mole, est un diisocyanate de polysiloxane organo-fonctionnel, sous la condition que la somme molaire de ce composé de diisocyanate de polysiloxane et du composé D ne dépasse pas 0,4 mole et que le rapport NCO:OH, dans la somme de composants A, B, C et D, est de 1,05:1,0 à 1,4:1,0.

5. Support d'enregistrement magnétique selon la revendication 1, caractérisé en ce que le composé B est, totalement ou en partie, remplacé par de la diamine à 2 à 15 atomes de carbone.

6. Support d'enregistrement magnétique selon la revendication 1, caractérisé en ce que le composé B est, totalement ou en partie, remplacé par des amino-alcools primaires ou secondaires à 2 à 20 atomes de carbone.

7. Support d'enregistrement magnétique selon la revendication 1, caractérisé en ce que le composé B est, totalement ou en partie, remplacé par de l'eau.

8. Support d'enregistrement magnétique selon la revendication 1, caractérisé en ce que le polyuréthanne ramifié, thermoplastique, contenant des groupes silicium, soluble dans du tétrahydrofurane, exempt de groupes isocyanate, avec des groupes d'urée contenant des groupes OH aux extrémités de chaîne, est réticulé avec un isocyanate du groupe des di-, tri- et polyisocyanates et des prépolymères d'isocyanate ayant un poids moléculaire allant jusqu'à 10000.

9. Support d'enregistrement magnétique selon la revendication 1, caractérisé en ce que les groupes d'extrémité OH sont composés à plus de 80 % d'un groupe

$$-NH-CO-NR'-R-OH$$

ou

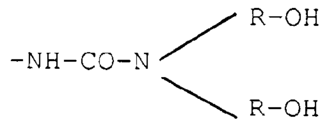

où

$$R = -(CH_2)_n-$$
$$R' = -H, -CH_3, -(CH_2)_n-CH_3$$

et

$$n = 1 \text{ à } 10.$$

**10.** Support d'enregistrement magnétique selon la revendication 8, caractérisé en ce que le composé de polyisocyanate réticulant est un isocyanate de polysiloxane ayant au moins deux groupes NCO.

**11.** Support d'enregistrement magnétique selon la revendication 8, caractérisé en ce qu'il comprend le polyuréthanne cité, comme seul liant.